# FASCICULE DE BREVET EUROPEEN

(11) **EP 2 420 444 B1**
(45) Date de publication et mention de la délivrance du brevet: **05.09.2012**
(21) Numéro de dépôt: 11006446.6
(22) Date de dépôt: 05.08.2011
(51) Int. Cl.: B64C 25/52

(54) **Train d'atterrissage à patins et procédé anti-basculement d' un giravion muni d'un tel train**
Fahrwerk mit Kufen und Antikippverfahren für ein mit einem solchen Fahrwerk ausgestattetes Drehflügelfahrzeug
Landing gear with skids and anti-tilting method of a rotorcraft provided with such a landing gear

(30) Priorité: 18.08.2010 FR 1003392
(43) Date de publication de la demande: 22.02.2012
(73) Titulaire: EUROCOPTER, 13725 Marignane Cédex (FR)
(72) Inventeur: Prud'homme-Lacroix, Pierre, 13127 Vitrolles (FR)
(74) Mandataire: GPI & Associés

(56) Documents cités:
- EP-A1- 0 512 898
- GB-A- 2 314 053
- US-A- 4 544 116
- US-A- 5 358 201
- US-A- 5 893 532

## Description

La présente invention concerne un train d'atterrissage à patins pour giravion, un train d'atterrissage d'hélicoptère notamment, et un procédé anti-basculement d'un giravion muni d'un tel train.

Classiquement, un giravion comporte un train d'atterrissage sur lequel le giravion repose au sol. Plus particulièrement, parmi les trains d'atterrissages, on distingue les trains d'atterrissage dénommés « train d'atterrissage à patins » munis d'un premier patin d'appui et d'un deuxième patin d'appui, destinés à être en contact avec le sol, disposés de part et d'autre du fuselage du giravion.

De plus, le train d'atterrissage à patins est usuellement muni d'une première traverse transversale et d'une deuxième traverse transversale reliant chacune le premier patin au deuxième patin.

La première traverse est dite «traverse arrière » dans la mesure où cette première traverse relie les zones situées à l'arrière des premier et deuxième patins. A l'inverse, la deuxième traverse est dite « traverse avant » puisque cette deuxième traverse relie les zones situées à l'avant des premier et deuxième patins longitudinaux.

Le train d'atterrissage est alors fixé au giravion via ses traverses avant et arrière.

On connait un type classique de train d'atterrissage à patins, décrit par exemple dans le document US2641423.

Selon ce type classique de train d'atterrissage à patins, le premier patin est muni d'une première partie longitudinale d'appui, le deuxième patin étant muni d'une deuxième partie longitudinale d'appui. La première partie longitudinale d'appui et la deuxième partie longitudinale d'appui définissent conjointement un plan de contact du train d'atterrissage sur le sol lorsque l'aéronef est posé.

Le premier patin et le deuxième patin étant reliés par une traverse avant et une traverse arrière, la traverse avant comprend une portion sommitale avant apte à être fixée à la cellule de l'aéronef, la traverse arrière comprenant une portion sommitale arrière apte à être fixée à cette cellule. Dès lors, la portion sommitale avant et la portion sommitale arrière définissent conjointement un plan de fixation du train d'atterrissage à la cellule de l'aéronef.

En outre, le premier patin comprend une première partie avant s'éloignant longitudinalement et en élévation de la première partie longitudinale d'appui en se rapprochant du plan de fixation, le deuxième patin comprenant une deuxième partie avant s'éloignant longitudinalement et en élévation de la deuxième partie longitudinale d'appui en se rapprochant du plan de fixation.

Les documents EP 0512898 et GB 2314053 présentent des trains d'atterrissages comprenant des parties longitudinales d'appui.

Selon un type de train d'atterrissage à patins, les parties avant sont de forme incurvée.

Par ailleurs, on note que les première et deuxième parties longitudinales des patins peuvent être munies de plaques d'usure, à l'instar des plaques liées rigidement aux patins présentés dans les documents US4544116, US5358201 et US5893532.

Les trains d'atterrissage à patins sont couramment utilisés sur les giravions.

Par ailleurs, pour empêcher l'enfoncement de l'aéronef en terrain meuble, on connaît un dispositif anti-enfoncement consistant en une surface additionnelle agencée à l'arrière des premier et deuxième patins, à proximité des extrémités arrière des première et deuxième parties longitudinales d'appui.

Par exemple, un tel dispositif anti-enfoncement est connu sous la dénomination « BEARPAW ».

En effet, selon une compréhension communément admise, et dans le cas des atterrisseurs à patins, quel qu'en soit le type, un hélicoptère qui atterrit avec une vitesse horizontale est soumis à un couple exercé par les réactions de frottement au contact du sol.

Si ce couple est supérieur à celui généré par les réactions éventuelles du rotor et les effets d'inertie, l'hélicoptère peut basculer vers l'avant, puis éventuellement sur le côté.

Durant une procédure d'atterrissage normale, le pilote doit limiter au maximum les effets du frottement afin de garder son appareil stable. Cependant, si la manoeuvre du pilote n'est pas normalement exécutée, la partie avant des patins peut subir une pression particulièrement élevée au contact du sol.

Cependant, dans des situations extrêmes c'est à dire lors d'atterrissages réalisés dans des conditions non couvertes par le manuel de vol, à savoir par exemple un atterrissage sur un sol mou usuellement constitué de terre, d'herbe ou de sable par exemple s'effectuant à des vitesses de descente et d'avancement supérieures aux vitesses autorisées, des incidents sont possibles. On comprend en effet qu'un pilote inexpérimenté, inattentif et/ou en cours de formation par exemple sortant des situations de vitesses recommandées dans le manuel de vol ou rencontrant des qualités de terrain inattendues s'expose à une diminution des marges de stabilité vers l'avant pouvant provoquer un accident.

On rappelle qu'un constructeur de giravion doit démontrer le respect de règlements de certification pour obtenir une autorisation de vol. Ces règlements de certification définissent les conditions pour lesquelles l'atterrissage doit être possible. Ainsi, un aéronef est dimensionné pour respecter de tels règlements de certification.

Cependant, si l'atterrissage est effectué en glissant à une vitesse d'avancement significative non prévue par le manuel de vol, suite à une autorotation faite par un pilote en cours de formation par exemple, les marges de stabilité sont réduites et il devient possible d'observer un basculement du giravion vers l'avant.

La présente invention a alors pour objet de proposer un train d'atterrissage étonnamment apte à au moins limiter le risque de basculement du giravion lors d'un atterrissage se déroulant en dehors des conditions d'atterrissage recommandées, pour minimiser le risque d'accident lors d'un vol d'entraînement réalisé par un pilote en cours de formation.

Selon l'invention, un train d'atterrissage est muni d'un premier patin pourvu d'une première partie longitudinale d'appui et d'un deuxième patin pourvu d'une deuxième partie longitudinale d'appui, la première partie longitudinale d'appui et la deuxième partie longitudinale d'appui définissant conjointement un plan de sustentation sur un sol, le premier patin et le deuxième patin étant reliés par une traverse avant et une traverse arrière, la traverse avant comprenant une portion sommitale avant apte à être fixée à la cellule de l'aéronef et la traverse arrière comprenant une portion sommitale arrière apte à être fixée à ladite cellule, ladite portion sommitale avant et la portion sommitale arrière définissant conjointement un plan de fixation, ledit premier patin comprenant une première partie avant s'éloignant longitudinalement et en élévation de la première partie longitudinale d'appui en se rapprochant du plan de fixation, ledit deuxième patin comprenant une deuxième partie avant s'éloignant longitudinalement et en élévation de la deuxième partie longitudinale d'appui en se rapprochant du plan de fixation. Dès lors, la partie avant de chaque patin prolonge la partie longitudinale d'appui en s'élevant vers l'avant à partir du plan de sustentation.

Un tel train d'atterrissage à patins est remarquable en ce qu'il comporte un moyen de glissement pourvu d'une première et d'une deuxième surfaces additionnelles, la première surface additionnelle étant fixée sous une première zone de contact couvrant au moins partiellement la première partie avant, la deuxième surface additionnelle étant fixée sous une deuxième zone de contact couvrant au moins partiellement la deuxième partie avant.

L'invention permet alors de manière extrêmement surprenante de limiter les risques de basculement, en agençant sous des zones de contact des patins en regard du sol un moyen de glissement.

En effet, antérieurement à l'invention, il était logique de penser qu'un incident constitue malheureusement une conséquence logique et inévitable d'un atterrissage mal réalisé ou dans des conditions particulièrement périlleuses et non prévues par le manuel de vol.

Or, la demanderesse a noté que lors d'un tel atterrissage, un train d'atterrissage à patins tend à se déformer.

Plus précisément, un atterrissage se produisant avec une vitesse verticale suffisante provoque une flexion de la partie longitudinale d'appui des patins.

Or, même si les patins sont bien parallèles au sol avant le posé sur un sol mou, cette flexion induit un enfoncement du train d'atterrissage, plus particulièrement des première et deuxième parties avant respectivement des premier et deuxième patins.

Cette situation n'est pas problématique sur un sol dur, tel que du béton, car le giravion glisse sur le sol lors d'un atterrissage avec une vitesse d'avancement significative.

Mais, a contrario, sur un sol mou, les première et deuxième parties avant s'enfoncent dans le sol. Le glissement du giravion est alors entravé, le giravion risquant alors de basculer vers l'avant puis latéralement si les pales du rotor heurtent le sol par exemple. De plus, en s'enfonçant dans le sol, les parties avant risquent de heurter un obstacle susceptible de provoquer un basculement de l'aéronef.

L'invention permet d'au moins limiter voire d'éviter des incidents lors d'atterrissages glissés sur un sol mou, en minimisant voire en empêchant l'enfoncement des première et deuxième parties avant dans ledit sol mou.

Il est à noter qu'un sol dur peut être représenté dans un modèle par éléments finis à l'aide d'éléments ayant une raideur infinie, alors qu'au contraire le sol mou est représenté par des éléments ayant une raideur qui n'est pas infinie.

Plus précisément, pour bien appréhender le problème, il convient de définir la raideur d'un sol mou de manière non constante. Ainsi, la raideur du sol mou peut avoir une première valeur importante au moment du contact entre le train d'atterrissage et le sol, puis une deuxième valeur faible suite à ce contact créant ainsi un pseudo comportement plastique.

En allant à l'encontre des préjugés existants pour déterminer de manière novatrice et innovante le problème à résoudre pour minimiser les risques d'incidents lors d'atterrissages se produisant des conditions hors normes, notamment en quantifiant un sol mou puis en y trouvant une solution simple à implémenter et contraire à l'art antérieur, la demanderesse a ainsi pu atteindre les objectifs assignés.

Contrairement à ce que l'on pouvait penser antérieurement à l'invention, il devient en effet possible d'atterrir avec des risques limités en glissant sur un sol mou avec un giravion muni d'un train d'atterrissage à patins tout en n'imposant pas au pilote une charge de travail et une expérience trop élevées.

En effet, les première et deuxième surfaces additionnelles minimisent voire empêchent l'enfoncement des parties avant des patins lors d'un atterrissage sur sol mou avec une vitesse d'avancement significative. Par conséquent, le giravion ne bascule pas indûment vers l'avant.

Cette solution peut être facilement implémentée sur tous les trains d'atterrissages à patins existants, sans modifications majeures et indépendamment du mode de réalisation de ce train à patins. En effet, quelle que soit la configuration du train d'atterrissage et indépendamment de l'agencement des traverses avant et arrière par rapport aux premier et deuxième patins, l'invention permet de répondre au problème posé.

L'invention peut en outre présenter une ou plusieurs des caractéristiques optionnelles qui suivent.

Par exemple, il est possible de prévoir que chaque partie avant s'élève au dessus du plan de sustentation, en étant éventuellement orientée vers le plan de symétrie longitudinal du train d'atterrissage.

En outre, au moins une surface additionnelle peut être incurvée de manière à pourvoir être plaquée sous une zone de contact associée.

Ainsi, la première surface additionnelle et/ou la deuxième surface additionnelle sont éventuellement incurvées pour être respectivement plaquées contre la première zone de contact et/ou la deuxième zone de contact associées.

Du fait de leur forme particulière, les première et deuxième surfaces additionnelles ne risquent donc pas de tourner autour respectivement des première et deuxième zones de contact. Les première et deuxième surfaces additionnelles sont donc en permanence dans la position adéquate.

De plus, il est envisageable qu'au moins une surface additionnelle soit conformée à la zone de contact associée, la première et/ou la deuxième surface(s) additionnelle(s) étant conformée(s) à la première et/ou à la deuxième zone(s) de contact associée(s).

En optimisant l'agencement des surfaces additionnelles, on minimise l'impact de ces surfaces additionnelles sur la trainée du giravion.

En outre, au moins une surface additionnelle, la première et/ou la deuxième surface additionnelle, est une plaque plane incurvée ce qui minimise les coûts de production.

Selon une première variante, au moins une surface additionnelle, la première et/ou la deuxième surface additionnelle, a une section rectangulaire pour faciliter sa fabrication.

Selon une deuxième variante, au moins une surface additionnelle, la première et/ou la deuxième surface additionnelle, a une section incurvée.

Selon une troisième variante représentant un compromis entre les première et deuxième variantes, au moins une surface additionnelle, la première et/ou la deuxième surface additionnelle, a une section trapézoïdale.

On comprend que les première et deuxième surfaces additionnelles peuvent être réalisées selon des variantes différentes. Toutefois, il semble avantageux de mettre des surfaces additionnelles issues d'une même variante sur un même train d'atterrissage.

Pour faciliter le glissement, chaque partie longitudinale d'appui comportant un tube d'un diamètre donné, au moins une surface additionnelle, la première et/ou la deuxième surface additionnelle, a une bande de contact possédant une largeur de contact avec le sol comprise entre 120% et 140% dudit diamètre donné pour être efficace en limitant la traînée aérodynamique de la surface additionnelle.

De manière surprenante, cette plage permet donc à ladite surface additionnelle de ne pas nuire indûment aux performances aérodynamiques du train d'atterrissage, et de ne pas diminuer ses performances de glissement.

De même, au moins une surface additionnelle est agencée sous la partie avant associée sur une première longueur donnée minimale apte à garantir un contact de ladite surface additionnelle avec le sol pour une inclinaison maximale autorisée dudit giravion.

Ainsi, la première surface additionnelle s'étend sous la première partie avant sur une première longueur donnée à partir de la première partie longitudinale d'appui du premier patin. De même, la deuxième surface additionnelle s'étend sous la deuxième partie avant sur une première longueur donnée à partir de la deuxième partie longitudinale d'appui du deuxième patin.

Plus précisément, le giravion peut de fait basculer vers l'avant d'une inclinaison maximale donnée, le fuselage ou les pales du giravion entrant en contact avec le sol au-delà de cette inclinaison maximale.

On détermine alors la première longueur donnée en considérant que la surface additionnelle doit être en contact avec le sol pour une inclinaison vers l'avant du giravion allant jusqu'à ladite inclinaison maximale, déterminée géométriquement de manière usuelle par l'homme du métier.

Alternativement, au moins une surface additionnelle est agencée sous la partie avant associée sur une deuxième longueur donnée supérieure à ladite première longueur minimale apte à garantir un contact de ladite surface additionnelle avec le sol pour une inclinaison maximale autorisée dudit giravion.

Ainsi, la surface additionnelle sera à même de dévier un obstacle indépendamment de l'inclinaison vers l'avant du giravion.

Optionnellement, la première zone de contact couvre de plus une première surface de contact avant du premier patin sur une longueur prédéterminée, et/ou la deuxième zone de contact couvre de plus une deuxième surface de contact avant du deuxième patin sur une longueur prédéterminée.

La surface additionnelle peut à l'extrême couvrir l'intégralité de la partie longitudinale d'appui du patin. Néanmoins, l'homme du métier voulant mettre en oeuvre cette variante détermine la longueur prédéterminée en faisant un compromis entre l'augmentation néfaste de masse due à la surface additionnelle et les performances anti-basculement de la surface additionnelle.

Il est à noter que les patins d'un train d'atterrissage classique comportent en général des plaques d'usure pour les protéger. Dans le cas présent, les surfaces additionnelles peuvent évidemment remplacer les plaques d'usure ce qui compense le surpoids généré par ces surfaces additionnelles.

Par ailleurs, au moins une surface additionnelle peut être fixée à la partie avant associée à l'aide d'un moyen d'accrochage par friction apte à ne pas modifier les raideurs des éléments travaillant du train d'atterrissage.

De plus, ladite surface additionnelle peut aussi être fixée au patin associé à l'aide dudit moyen d'accrochage.

La première surface additionnelle est alors optionnellement fixée à la première partie avant associée et éventuellement à la première partie longitudinale d'appui du premier patin associé à l'aide d'un moyen d'accrochage par friction, comportant éventuellement un ou plusieurs colliers solidaires de la première surface additionnelle, apte à ne pas modifier les raideurs des éléments travaillant du train d'atterrissage. De même, la deuxième surface additionnelle est optionnellement fixée à la deuxième partie avant associée et éventuellement à la deuxième partie longitudinale d'appui du deuxième patin associé à l'aide d'un moyen d'accrochage par friction, comportant éventuellement un ou plusieurs colliers solidaires de la deuxième surface additionnelle, apte à ne pas modifier les raideurs des éléments travaillant du train d'atterrissage.

Dans ces conditions, les première et deuxième surfaces additionnelles ne modifient pas les performances du train d'atterrissage à patins. Il n'est donc pas utile de procéder à des essais ou des calculs de certification complémentaires puisque notamment les raideurs verticales et horizontales ainsi que les fréquences propres du giravion sur son train d'atterrissage restent inchangées.

Par exemple, on peut disposer un organe de liaison souple entre au moins une surface additionnelle et la zone de contact associée, chaque organe de liaison souple comportant par exemple un matériau faisant partie du groupe des élastomères.

Ainsi, on dispose un organe de liaison souple entre la première surface additionnelle et la première zone de contact, ainsi qu'entre le moyen d'accrochage de la première surface additionnelle et cette première zone de contact.

De même, on dispose un organe de liaison souple entre la deuxième surface additionnelle et la deuxième zone de contact, ainsi qu'entre le moyen d'accrochage de la deuxième surface additionnelle et cette deuxième zone de contact.

Par suite, du fait de cette interface souple, il n'y a pas de liaison rigide entre chaque surface additionnelle et les première et deuxième parties longitudinales d'appui, ainsi qu'entre chaque surface additionnelle et la partie avant des patins.

La présente invention a aussi pour objet un procédé pour au moins limiter le risque de basculement voire empêcher le basculement vers l'avant ou sur le côté d'un giravion lors d'un atterrissage, ce giravion ayant un train d'atterrissage muni d'un premier patin pourvu d'une première partie longitudinale d'appui et d'un deuxième patin pourvu d'une deuxième partie longitudinale d'appui, la première partie longitudinale d'appui et la deuxième partie longitudinale d'appui définissant conjointement un plan de sustentation sur un sol, le premier patin et le deuxième patin étant reliés par une traverse avant et une traverse arrière, la traverse avant comprenant une portion sommitale avant apte à être fixée à la cellule de l'aéronef et la traverse arrière comprenant une portion sommitale arrière apte à être fixée à ladite cellule, ladite portion sommitale avant et la portion sommitale arrière définissant conjointement un plan de fixation, ledit premier patin comprenant une premier partie avant s'éloignant longitudinalement et en élévation de la première partie longitudinale d'appui en se rapprochant du plan de fixation, ledit deuxième patin comprenant une deuxième partie avant s'éloignant longitudinalement et en élévation de la deuxième partie longitudinale d'appui en se rapprochant du plan de fixation.

Au cours de ce procédé, on dispose un moyen de glissement pourvu d'une première et d'une deuxième surfaces additionnelles respectivement sous une première zone de contact couvrant au moins partiellement la première partie avant et sous une deuxième zone de contact couvrant au moins partiellement la deuxième partie avant.

Indépendamment de la dextérité du pilote du giravion et des conditions de l'atterrissage, le giravion ne risque alors pas de basculer vers l'avant ou sur le côté.

Il est à noter que, de manière optionnelle, on attache les première et deuxième surfaces additionnelles respectivement à un premier ensemble comportant au moins la première partie avant et à un deuxième ensemble comportant au moins la deuxième partie avant, plus précisément sous les première et deuxième zones de contact desdits premier et deuxième ensembles en regard du sol quand le giravion est posé.

Outre la première partie avant, le premier ensemble peut comporter la première surface de contact du premier patin. De même, en plus de la deuxième partie avant, le deuxième ensemble peut comporter la deuxième surface de contact du deuxième patin.

De plus, on peut disposer un organe de liaison élastique entre au moins une surface additionnelle et la zone de contact associée.

L'invention et ses avantages apparaîtront avec plus de détails dans le cadre de la description qui suit avec des exemples de réalisation donnés à titre illustratif en référence aux figures annexées qui représentent :
- la figure 1, une vue isométrique schématique d'un train d'atterrissage selon l'invention,
- la figure 2, une vue de côté montrant une première longueur d'une surface additionnelle,
- la figure 3, une vue de côté d'une surface additionnelle selon l'invention agencée sur un train d'atterrissage,
- la figure 4, une section d'une surface additionnelle selon une première variante,
- la figure 5, une section d'une surface additionnelle selon une deuxième variante, et
- la figure 6, une section d'une surface additionnelle selon une troisième variante,
- la figure 7, une section d'une surface additionnelle selon une quatrième variante.

Les éléments présents dans plusieurs figures distinctes sont affectés d'une seule et même référence.

On note que trois directions X, Y et Z orthogonales les unes par rapport aux autres sont représentées sur les figures.

La direction X est dite longitudinale dans la mesure où elle s'étend selon la direction longitudinale du giravion équipé de l'invention, aussi dénommé axe de roulis. Le terme « longueur » est relatif à une dimension selon cette direction longitudinale X.

Une autre direction Y est dite transversale dans la mesure où elle s'étend selon la direction transversale du giravion équipé de l'invention, aussi dénommé axe de tangage. Le terme « largeur » est relatif à une dimension selon cette direction transversale.

Enfin, une troisième direction Z est dite d'élévation dans la mesure où elle s'étend selon la direction verticale du giravion équipé de l'invention, aussi dénommé axe de lacet.

On note que les directions longitudinale X et transversale Y définissent un plan dénommé plan horizontal XY, alors que les directions longitudinale X et en élévation Z définissent un plan dénommé plan vertical XZ.

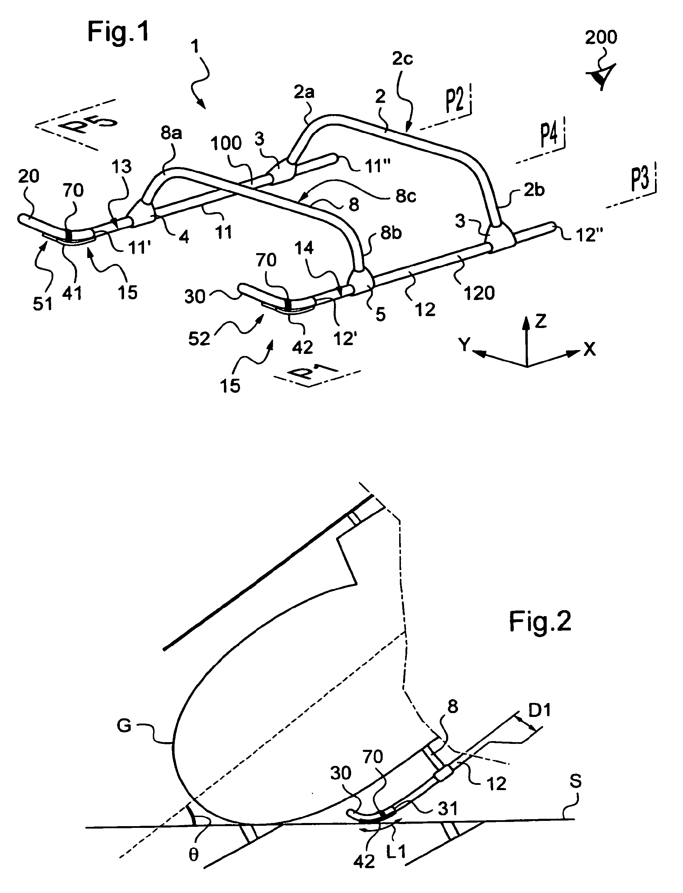

La figure 1 présente une vue isométrique schématique d'un train d'atterrissage 1 de giravion selon l'invention.

Ce train d'atterrissage 1 comporte un premier et un deuxième patins 11, 12 destinés à être en contact avec le sol lorsque le giravion, un hélicoptère par exemple, repose sur ledit sol.

Ces premier et deuxième patins 11, 12 sont respectivement disposés à droite et à gauche du fuselage du giravion, la droite et la gauche étant définies par rapport à un observateur 200 qui regarderait l'arrière du giravion.

Le premier patin comporte une première partie longitudinale d'appui 110 s'étendant longitudinalement d'une première extrémité avant 11' vers une première extrémité arrière 11" de l'avant vers l'arrière du giravion. De même, le deuxième patin comporte une deuxième partie longitudinale d'appui 120 s'étendant longitudinalement d'une deuxième extrémité avant 12' vers une deuxième extrémité arrière 12".

De plus, les premier et deuxième patins 11, 12 sont reliées par une traverse arrière 2. En effet, une première et une deuxième branches descendantes 2a, 2b de cette traverse arrière 2 sont fixées aux premier et deuxième patins 11, 12 par exemple par des premiers manchons 3.

Une portion sommitale arrière 2c de la traverse arrière peut alors être fixée à un giravion via au moins un moyen de fixation.

Le train d'atterrissage 1 comporte en outre une traverse avant 8 pour relier les premier et deuxième patins.

En effet, la traverse avant 8 possède d'une part une première branche descendante 8a fixée au premier patin 11 par un deuxième manchon 4 par exemple, et, d'autre part une deuxième branche descendante 8b fixée au deuxième patin 12 par un deuxième manchon 5 par exemple. Une portion sommitale avant 8c de la traverse avant peut alors être fixée à un giravion via au moins un moyen de fixation, la portion sommitale avant 8c étant agencée entre les première et deuxième branches descendantes 8a, 8b.

La portion sommitale arrière 2c et la portion sommitale avant 8c sont disposées dans un plan, dénommé « plan de fixation P5 » par commodité.

La première partie longitudinale d'appui 110 et la deuxième partie longitudinale d'appui 120 définissent conjointement un plan de sustentation P1 sur lequel repose le train d'atterrissage 1 au sol.

En outre, les premier et deuxième patins 11, 12 comportent respectivement une première partie avant 20 et une deuxième partie avant 30 prolongeant respectivement les première et deuxième parties longitudinales d'appui 110, 120.

La première partie avant 20 est alors solidarisée à la première extrémité avant 11' de la première partie longitudinale d'appui 110. Cette première partie avant 20 s'élève vers l'avant au dessus du plan de sustentation P1, parallèle au plan horizontal XY et en contact avec le sol quand le giravion est posé, en se rapprochant du plan de fixation P5 et en s'éloignant de la première partie longitudinale d'appui 110.

Plus précisément, la première partie avant 20 s'élève au dessus du plan de sustentation P1 et parallèlement au plan de symétrie P4 longitudinal du giravion.

Ainsi, cette première partie avant 20 est contenue dans le plan en élévation P2 passant par le premier patin 11, ce plan en élévation P2 pouvant être parallèle au plan vertical XZ et au plan de symétrie P4 longitudinal du giravion.

La deuxième partie avant 30 est alors solidarisée à la deuxième extrémité avant 12' de la deuxième partie longitudinale d'appui 120. Cette deuxième partie avant 30 s'élève vers l'avant au dessus du plan de sustentation P1, parallèle au plan horizontal XY et en contact avec le sol quand le giravion est posé, en se rapprochant du plan de fixation P5 et en s'éloignant de la deuxième partie longitudinale d'appui 120.

Plus précisément, la deuxième partie avant 30 s'élève au dessus du plan de contact P1 et parallèlement au plan de symétrie P4 longitudinal du giravion.

Ainsi, cette deuxième partie avant 30 est contenue dans le plan en élévation P3 passant par le deuxième patin 12, ce plan en élévation P3 pouvant être parallèle au plan vertical XZ et au plan de symétrie P4 longitudinal du giravion.

Le train d'atterrissage comporte de plus un moyen de glissement 15, faisant office de dispositif anti-basculement, muni d'une première et d'une deuxième surfaces additionnelles 41, 42 pour éviter que le giravion bascule vers l'avant ou sur le côté lors d'un atterrissage avec une vitesse d'avancement non nulle sur un sol mou.

La première surface additionnelle 41 est alors agencée sous une première surface de contact 51 qui recouvre au moins partiellement la première partie avant 20.

De même, la deuxième surface additionnelle 42 est agencée sous une deuxième surface de contact 52 qui recouvre au moins partiellement la deuxième partie avant 30.

Ainsi, chaque surface de contact 51, 52 est en regard du sol, voire même partiellement en contact avec le sol quand le giravion est posé.

Par conséquent, lorsque le giravion glisse sur le sol, les première et deuxième surfaces additionnelles 41, 42 sont en contact avec le sol. Ces première et deuxième surfaces additionnelles 41, 42 limitent voire empêchent l'enfoncement du train d'atterrissage 1 dans le sol et par suite un basculement significatif vers l'avant ou sur le côté du giravion de nature à détériorer ce giravion.

Enfin, la figure 1 montre que les premier et deuxième patins sont avantageusement symétriques par rapport au plan de symétrie P4.

La figure 2 présente une vue de côté d'un giravion muni d'une réalisation de l'invention.

Selon le mode de réalisation présenté, chaque surface additionnelle s'étend uniquement et partiellement sous la partie avant associée, en étant fixée à cette partie avant.

Plus précisément, la figure 2 montre la deuxième surface additionnelle 42 qui s'étend partiellement sous la deuxième partie avant 30 sur une première longueur donnée L1.

On constate que la deuxième surface additionnelle 42 reste en contact avec le sol S jusqu'à ce que le giravion G atteigne une inclinaison θ égale à une inclinaison maximale, en dessous de laquelle le fuselage ou les pales du giravion ne risquent pas d'entrer en collision avec le sol.

On note que chaque surface additionnelle peut notamment être fixée à la deuxième partie avant 30 à l'aide d'un moyen d'accrochage 70.

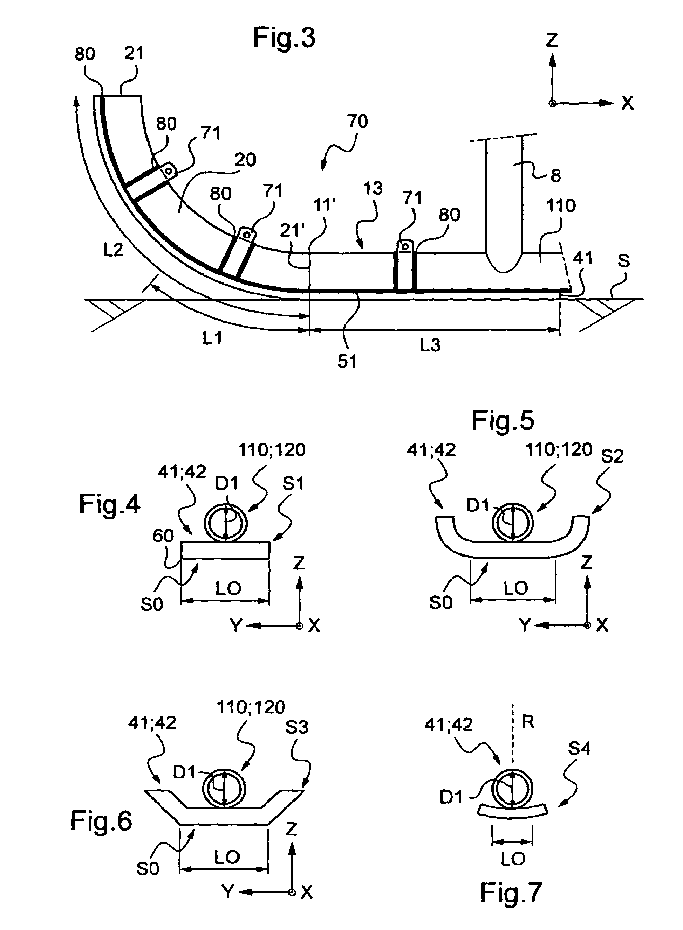

La figure 3 présente une vue de côté d'une surface additionnelle selon l'invention agencée sur un train d'atterrissage, plus précisément la première surface additionnelle 41 qui repose partiellement sur un sol S.

Selon le mode de réalisation présenté sur cette figure 3, chaque surface additionnelle ne s'étend pas uniquement sous la partie avant associée sur ladite première longueur donnée L1.

Cette première surface additionnelle 41 est une plaque plane incurvée agencée sous la première zone de contact 51 en étant fixée à la première partie longitudinale d'appui 110 et à la première partie avant 20 du premier patin 11 à l'aide d'un moyen d'accrochage 70. Ce moyen d'accrochage 70 comprend trois colliers 71 solidaires de la première surface additionnelle, un premier collier enserrant la première partie longitudinale d'appui 110 du premier patin 11 au niveau de la première surface de contact 13 alors qu'un deuxième collier et un troisième collier enserrent la première partie avant 20.

Un organe de liaison souple 80, par exemple une couche en un matériau faisant partie du groupe des élastomères, est alors avantageusement agencé entre la première surface additionnelle 41 et la première surface de contact 13. Similairement, un organe de liaison souple 80 est disposé entre chaque collier 71 du moyen d'accrochage 70 et l'élément que ce collier 71 enserre.

Ainsi, la première surface additionnelle 41 est liée au premier patin 11 par un organe de liaison souple afin de ne pas dégrader les performances du train d'atterrissage 1.

En effet, en raison de l'organe de liaison souple, la première surface additionnelle 41 ne risque pas de modifier les raideurs des éléments travaillants du train d'atterrissage.

En outre, la première surface additionnelle 41 est incurvée de manière à suivre le profil de la première surface de contact 13.

Il apparaît que la première surface additionnelle 41 ne peut alors pas effectuer une rotation autour du premier patin, du fait de l'interférence de forme.

Enfin, la première surface additionnelle 41 s'étend, sous la première surface de contact 13 de la première partie longitudinale d'appui 110 à partir de sa première extrémité avant 11' et donc vers sa première extrémité arrière 11", sur une longueur prédéterminée L3.

Eventuellement, la surface additionnelle 41 peut s'étendre le long de l'intégralité du patin, la longueur prédéterminée L3 allant alors de la première extrémité avant du patin vers la première extrémité arrière de ce patin.

A contrario, la première surface additionnelle 41 peut s'étendre sous la première partie avant 20, à partir de la zone de liaison 21' de la première partie avant 20 à la première extrémité avant 11' de la première partie longitudinale d'appui 110, sur une deuxième longueur donnée L2 supérieure à ladite première longueur donnée L1 précitée pour permettre la déviation d'obstacles quel que soit l'inclinaison θ vers l'avant du giravion.

Eventuellement, la partie avant ayant une forme de spatule, la surface additionnelle 41 peut s'étendre le long de l'intégralité de la spatule, la deuxième longueur donnée L2 s'étendant de la zone de liaison 21' de la spatule à la partie longitudinale d'appui associée vers l'extrémité libre 21 de cette spatule.

On comprend bien que la deuxième surface additionnelle 42 pouvant être symétrique à la première surface additionnelle 41 par rapport au plan de symétrie P4, les commentaires mentionnés précédemment lors de la description de la figure 3 lui sont aussi applicables.

La figure 4 montre une section d'une surface additionnelle selon une première variante.

Conformément à cette première variante, la surface additionnelle est une plaque, incurvée pour suivre la forme de la zone de contact associée, ayant une section rectangulaire S1.

Au contraire, en référence à la deuxième variante représentée sur la figure 5 n'importe quelle section de la surface additionnelle est une section incurvée S2 de manière à présenter une concavité vers la zone de contact.

La figure 6 présente une section trapézoïdale S3 d'une surface additionnelle selon une troisième variante.

Selon une autre variante relative à la figure 7, il est possible de conformer une surface additionnelle à la zone de contact associée.

Enfin, indépendamment de la variante choisie, il est avantageux que la bande de contact S0 destinée à reposer sur le sol S ait une largeur de contact L0 comprise entre 120% à 140% du diamètre D1 du tube de la partie longitudinale d'appui 110, 120 associée.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, la figure 1 présente une traverse avant quasiment orthogonale aux premier et deuxième patins fixée aux première et deuxième parties longitudinales d'appui desdits premier et deuxième patins. Toutefois, toutes les configurations de trains d'atterrissage sont envisageables, et par exemple l'utilisation d'une traverse avant inclinée et/ou fixée aux parties avant.

## Revendications

1. Train d'atterrissage (1) muni d'un premier patin (11) pourvu d'une première partie longitudinale d'appui (110) et d'un deuxième patin (12) pourvu d'une deuxième partie longitudinale d'appui (120), la première partie longitudinale d'appui (110) et la deuxième partie longitudinale d'appui (120) définissant conjointement un plan de sustentation (P1) sur un sol (S), le premier patin (11) et le deuxième patin (12) étant reliés par une traverse avant (8) et une traverse arrière (2), la traverse avant (8) comprenant une portion sommitale (8c) avant apte à être fixée à une cellule de l'aéronef et la traverse arrière (2) comprenant une portion sommitale arrière (2c) apte à être fixée à ladite cellule, ladite portion sommitale avant (8c) et la portion sommitale arrière (2c) définissant conjointement un plan de fixation (P5), ledit premier patin (11) comprenant une première partie avant (20) s'éloignant longitudinalement et en élévation de la première partie longitudinale d'appui (110) en se rapprochant du plan de fixation (P5), ledit deuxième patin (12) comprenant une deuxième partie avant (30) s'éloignant longitudinalement et en élévation de la deuxième partie longitudinale d'appui (120) en se rapprochant du plan de fixation (P5),
**caractérisé en ce qu'**il comporte un moyen de glissement (15) pourvu d'une première et d'une deuxième surfaces additionnelles (41, 42), ladite première surface additionnelle (41) étant fixée sous une première zone de contact (51) couvrant au moins partiellement ladite première partie avant (20), ladite deuxième surface additionnelle (42) étant fixée sous une deuxième zone de contact (52) couvrant au moins partiellement ladite deuxième partie avant (30) et **en ce que** chaque partie longitudinale d'appui (110, 120) ayant un tube d'un diamètre donné (D1), au moins une surface additionnelle (41, 42) a une bande de contact (S0) possédant une largeur de contact (L0) avec le sol d'une valeur comprise entre 120% et 140% dudit diamètre.

2. Train d'atterrissage selon la revendication 1,
**caractérisé en ce qu'**au moins une surface additionnelle (41, 42) est incurvée de manière à pourvoir être plaquée sous la zone de contact (51, 52) associée.

3. Train d'atterrissage selon l'une quelconque des revendications précédentes,
**caractérisé en ce qu'**au moins une surface additionnelle (41, 42) est conformée à la zone de contact (51, 52) associée.

4. Train d'atterrissage selon l'une quelconque des revendications précédentes,
**caractérisé en ce que** ladite première zone de contact (51) couvre de plus une première surface de contact avant (13) de la première partie longitudinale d'appui (110) sur une longueur prédéterminée (L3), et/ou **en ce que** ladite deuxième zone de contact (52) couvre de plus une deuxième surface de contact avant (14) de la deuxième partie longitudinale d'appui (120) sur une longueur prédéterminée (L3).

5. Train d'atterrissage selon l'une quelconque des revendications précédentes,
**caractérisé en ce qu'**au moins une surface additionnelle (41, 42) est fixée à la partie avant (20, 30) associée à l'aide d'un moyen d'accrochage (70) par friction apte à ne pas modifier les raideurs des éléments travaillants du train d'atterrissage (1).

6. Train d'atterrissage selon l'une quelconque des revendications 1 à 4,
**caractérisé en ce qu'**au moins une surface additionnelle (41, 42) est fixée à la partie avant (20, 30) associée et à la partie longitudinale d'appui (110, 120) associé à l'aide d'un moyen d'accrochage (70) par friction apte à ne pas modifier les raideurs des éléments travaillants du train d'atterrissage (1).

7. Train d'atterrissage selon l'une quelconque des revendications précédentes,
**caractérisé en ce qu'**un organe de liaison élastique (80) est disposé entre au moins une surface additionnelle (41, 42) et la zone de contact (51, 52) associée.

8. Procédé pour au moins limiter le risque de basculement voire empêcher le basculement vers l'avant ou sur le côté d'un giravion lors d'un atterrissage, ledit giravion ayant un train d'atterrissage (1) muni d'un premier patin (11) pourvu d'une première partie longitudinale d'appui (110) et d'un deuxième patin (12) pourvu d'une deuxième partie longitudinale d'appui (120), la première partie longitudinale d'appui (110) et la deuxième partie longitudinale d'appui (120) définissant conjointement un plan de sustentation (P1) sur un sol (S), le premier patin (11) et le deuxième patin (12) étant reliés par une traverse avant (8) et une traverse arrière (2), la traverse avant (8) comprenant une portion sommitale (8c) avant apte à être fixée à une cellule d'aéronef et la traverse arrière (2) comprenant une portion sommitale arrière (2c) apte à être fixée à ladite cellule, ladite portion sommitale avant (8c) et la portion sommitale arrière (2c) définissant conjointement un plan de fixation (P5), ledit premier patin (11) comprenant une première partie avant (20) s'éloignant longitudinalement et en élévation de la première partie longitudinale d'appui (110) en se rapprochant du plan de fixation (P5), ledit deuxième patin (12) comprenant une deuxième partie avant (30) s'éloignant longitudinalement et en élévation de la deuxième partie longitudinale d'appui (120) en se rapprochant du plan de fixation (P5),
au cours duquel l'on dispose un moyen de glissement (15) pourvu d'une première et d'une deuxième surfaces additionnelles (41, 42) respectivement sous une première zone de contact (51) couvrant au moins partiellement ladite première partie avant (20) et sous une deuxième zone de contact (52) couvrant au moins partiellement ladite deuxième partie avant (30).

9. Procédé selon la revendication 8,
**caractérisé en ce que** l'on attache lesdites première et deuxième surfaces additionnelles (41, 42) respectivement à un premier ensemble comportant au moins ladite première partie avant (20) et à un deuxième ensemble comportant au moins ladite deuxième partie avant (30).

10. Procédé selon l'une quelconque des revendications 8 à 9,
**caractérisé en ce que** l'on dispose un organe de liaison souple (80) entre au moins une surface additionnelle (41, 42) et la zone de contact (51, 52) associée.

## Claims

1. A landing gear (1) equipped with a first skid (11) provided with a first longitudinal bearing part (110) and a second skid (12) provided with a second longitudinal bearing part (120), wherein the first longitudinal bearing part (110) and the second longitudinal bearing part (120) together define a support plane (P1) at ground level (S), wherein the first skid (11) and the second skid (12) are connected by a front cross piece (8) and a rear cross piece (2), wherein the front cross piece (8) comprises a front top portion (8c) suitable for being fixed to an airframe of the aircraft, and the rear cross piece (2) comprises a rear top portion (2c) suitable for being fixed to said airframe, wherein said front top portion (8c) and the rear top portion (2c) together define a fixing plane (P5), wherein said first skid (11) comprises a first front part (20) extending longitudinally away from and upwards of the first longitudinal bearing part (110) and towards the fixing plane (P5), wherein said second skid (12) comprises a second front part (30) extending longitudinally away from and upwardly of the second longitudinal bearing part (120) and towards the fixing plane (P5),
**characterised in that** it comprises a sliding means (15) which is provided with a first and a second additional surface (41, 42), wherein said first additional surface (41) is fixed below a first contact zone (51) at least partly covering said first front part (20), wherein said second additional surface (42) is fixed below a second contact zone (52) at least partly covering said second front part (30), and **in that**, where each longitudinal bearing part (110, 120) has a tube of a given diameter (D1), at least one additional surface (41, 42) has a contact strip (S0) having a width of contact (L0) with the ground with a value of between 120% and 140% of said diameter.

2. A landing gear according to Claim 1, **characterised in that** at least one additional surface (41, 42) is curved such that it may be laid snugly below the associated contact zone (51, 52).

3. A landing gear according to either of the preceding claims, **characterised in that** at least one additional surface (41, 42) is matched in shape to the associated contact zone (51, 52).

4. A landing gear according to any one of the preceding claims, **characterised in that** said first contact zone (51) further covers a first front contact surface (13) of the first longitudinal bearing part (110) over a predetermined length (L3), and/or **in that** said second contact zone (52) further covers a second front contact surface (14) of the second longitudinal bearing part (120) over a predetermined length (L3).

5. A landing gear according to any one of the preceding claims, **characterised in that** at least one additional surface (41, 42) is fixed to the associated front part (20, 30) with the aid of a hooking means (70) by friction in a manner suitable for not altering the stiffness of the operational elements of the landing gear (1).

6. A landing gear according to any one of Claims 1 to 4, **characterised in that** at least one additional surface (41, 42) is fixed to the associated front part (20, 30) and the associated longitudinal bearing part (110, 120) with the aid of a hooking means (70) by friction in a manner suitable for not altering the stiffness of the operational elements of the landing gear (1).

7. A landing gear according to any one of the preceding claims, **characterised in that** a resilient connecting member (80) is arranged between at least one additional surface (41, 42) and the associated contact zone (51, 52).

8. A method for at least limiting the risk of tipping, or even preventing tipping, by a rotorcraft forwards or sideways during landing, wherein said rotorcraft has a landing gear (1) equipped with a first skid (11) provided with a first longitudinal bearing part (110) and a second skid (12) provided with a second longitudinal bearing part (120), wherein the first longitudinal bearing part (110) and the second longitudinal bearing part (120) together define a support plane (P1) at ground level (S), wherein the first skid (11) and the second skid (12) are connected by a front cross piece (8) and a rear cross piece (2), wherein the front cross piece (8) comprises a front top portion (8c) suitable for being fixed to an airframe of an aircraft, and the rear cross piece (2) comprises a rear top portion (2c) suitable for being fixed to said airframe, wherein said front top portion (8c) and the rear top portion (2c) together define a fixing plane (P5), wherein said first skid (11) comprises a first front part (20) extending longitudinally away from and upwards of the first longitudinal bearing part (110) and towards the fixing plane (P5), wherein said second skid (12) comprises a second front part (30) extending longitudinally away from and upwardly of the second longitudinal bearing part (120) and towards the fixing plane (P5),
during which a sliding means (15) which is provided with a first and a second additional surface (41, 42) is arranged respectively below a first contact zone (51) at least partly covering said first front part (20) and below a second contact zone (52) at least partly covering said second front part (30).

9. A method according to Claim 8, **characterised in that** said first and second additional surfaces (41, 42) are respectively attached to a first assembly comprising at least said first front part (20) and a second assembly comprising at least said second front part (30).

10. A method according to either of Claims 8 and 9, **characterised in that** a flexible connecting member (80) is arranged between at least one additional surface (41, 42) and the associated contact zone (51, 52).

## Patentansprüche

1. Landegestell (1) mit einer ersten Kufe (11), die mit einem ersten länglichen Auflagebereich (110) versehen ist, und einer zweiten Kufe (12), die mit einem zweiten länglichen Auflagebereich (120) versehen ist, wobei der erste längliche Auflagebereich (110) und der zweite längliche Auflagebereich (120) zusammen eine Abstützebene (P1) auf dem Boden (S) definieren, wobei die erste Kufe (11) und die zweite Kufe (12) durch einen vorderen Querträger (8) und einen hinteren Querträger (2) verbunden sind, wobei der vordere Querträger (8) einen vorderen Gipfelbereich (8c) aufweist, der an einer Kabine des Luftfahrzeugs befestigt werden kann, und wobei der hintere Querträger (2) einen hinteren Gipfelbereich (2c) aufweist, der an der Kabine befestigt werden kann, wobei der vordere Gipfelbereich (8c) und der hintere Gipfelbereich (2c) zusammen eine Befestigungsebene (P5) definieren, wobei die erste Kufe (11) einen ersten vorderen Bereich (20) aufweist, der sich längs und nach oben bezüglich des ersten länglichen Auflagebereichs (110) entfernt und sich der Befestigungsebene (P5) nähert, wobei die zweite Kufe (12) einen zweiten vorderen Bereich (30) aufweist, der sich längs und nach oben bezüglich des zweiten länglichen Auflagebereichs (120) entfernt und sich der Befestigungsebene (P5) nähert,
**gekennzeichnet durch** ein Gleitorgan (15) mit einer ersten und einer zweiten zusätzlichen Fläche (41, 42), wobei die erste zusätzliche Fläche (41) unter einem ersten Kontaktbereich (51) befestigt ist, der mindestens teilweise den ersten vorderen Bereich (20) abdeckt, wobei die zweite zusätzliche Fläche (42) unter einem zweiten Kontaktbereich (52) befestigt ist, der mindestens teilweise den zweiten vorderen Bereich (30) abdeckt, und **dadurch**, dass jeder längliche Auflagebereich (110, 120) ein Rohr mit einem gegebenen Durchmesser (P1) aufweist, mindestens eine zusätzliche Fläche (41, 42) einen Kontaktbereich (S0) aufweist mit einer Kontaktbreite (L0) mit dem Boden von einem Wert, der zwischen 120% und 140% des Durchmessers liegt.

2. Landegestell nach Anspruch 1,
**dadurch gekennzeichnet, dass** mindestens eine zusätzliche Fläche (41, 42) gekrümmt ist, sodass sie unter dem zugehörigen Kontaktbereich eingebaut werden kann.

3. Landegestell nach einem der vorstehenden Anspruche,
**dadurch gekennzeichnet, dass** mindestens eine zusätzliche Fläche (41, 42) an den zugehörigen Kontaktbereich (51, 52) angepasst ist.

4. Landegestell nach einem der vorstehenden Ansprüche,
**dadurch gekennzeichnet, dass** der erste Kontaktbereich (51) außerdem eine erste vordere Kontaktfläche (13) des ersten länglichen Auflagebereichs (110) auf einer vorbestimmten Länge (L3) abdeckt und/oder dadurch, dass der zweite Kontaktbereich (52) außerdem eine zweite vordere Kontaktfläche (14) des zweiten länglichen Auflagebereichs (120) über eine vorbestimmte Länge (L3) abdeckt.

5. Landegestell nach einem der vorstehenden Ansprüche,
**dadurch gekennzeichnet, dass** mindestens eine zusätzliche Fläche (41, 42) an dem zugehörigen vorderen Bereich (20, 30) befestigt ist mit Hilfe eines Reibschlussmittels (70), welches in der Lage ist, die Steifigkeiten der belasteten Elemente des Landegestells (1) zu verändern.

6. Landegestell nach einem der Ansprüche 1 bis 4,
**dadurch gekennzeichnet, dass** mindestens eine zusätzliche Fläche (41, 42) an dem zugehörigen vorderen Bereich (20, 30) und an dem zugehörigen länglichen Auflagebereich (110, 120) mit Hilfe eines Reibschlussmittels (70) befestigt ist, welches in der Lage ist, die Steifigkeiten der belasteten Elemente des Landegestells (1) nicht zu verändern.

7. Landegestell nach einem der vorstehenden Ansprüche,
**dadurch gekennzeichnet, dass** ein elastisches Verbindungsorgan (80) zwischen mindestens einer zusätzlichen Fläche (41, 42) und dem zugehörigen Kontaktbereich (51, 52) angeordnet ist.

8. Verfahren, um mindestens das Risiko eines Kippens zu begrenzen, vorzugsweise ein Kippen nach vorne oder zur Seite eines Drehflügelflugzeugs während einer Landung zu verhindern, wobei das Drehflügelflugzeug ein Landegestell (1) aufweist mit einer ersten Kufe (11), die mit einem ersten länglichen Auflagebereich (110) versehen ist, und einer zweiten Kufe (12), die mit einem zweiten länglichen Auflagebereich (120) versehen ist, wobei der erste längliche Auflagebereich (110) und der zweite längliche Auflagebereich (120) zusammen eine Abstützebene (P1) auf dem Boden (S) definieren, wobei die erste Kufe (11) und die zweite Kufe (12) durch einen vorderen Querträger (8) und einen hinteren Querträger (2) verbunden sind, wobei der vordere Querträger (8) einen vorderen Gipfelbereich (8c) aufweist, der an einer Kabine des Luftfahrzeugs befestigt werden kann, und wobei der hintere Querträger (2) einen hinteren Gipfelbereich (2c) aufweist, der an der Kabine befestigt werden kann, wobei der vordere Gipfelbereich (8c) und der hintere Gipfelbereich (2c) zusammen eine Befestigungsebene (P5) definieren, wobei die erste Kufe (11) einen ersten vorderen Bereich (20) aufweist, der sich längs und nach oben bezüglich des ersten länglichen Auflagebereichs (110) entfernt und sich der Befestigungsebene (P5) nähert, wobei die zweite Kufe (12) einen zweiten vorderen Bereich (30) aufweist, der sich längs und nach oben bezüglich des zweiten länglichen Auflagebereichs (120) entfernt und sich der Befestigungsebene (P5) nähert, bei dem man ein Gleitorgan (15) versehen mit einer ersten und einer zweiten zusätzlichen Fläche (41, 42) jeweils unter einem ersten Kontaktbereich (51) anbringt, der mindestens teilweise den ersten vorderen Bereich (20) abdeckt, und unter einem zweiten Kontaktbereich (52), der mindestens teilweise den zweiten vorderen Bereich (30) abdeckt.

9. Verfahren nach Anspruch 8,
**dadurch gekennzeichnet, dass** man die ersten und zweiten zusätzlichen Flächen (41, 42) jeweils an einer ersten Gruppe befestigt, die mindestens den ersten vorderen Teil (20) umfasst, und an einer zweiten Gruppe, die mindestens den zweiten vorderen Bereich (30) umfasst.

10. Verfahren nach einem der Ansprüche 8 oder 9,
**dadurch gekennzeichnet, dass** ein weiches Verbindungsorgan (80) zwischen mindestens einer zusätzlichen Fläche (41, 42) und dem zugehörigen Kontaktbereich (51, 52) angeordnet ist.
